Europäisches Patentamt

European Patent Office

Office européen des brevets

(11) Veröffentlichungsnummer: **0 098 481**
**B1**

# EUROPÄISCHE PATENTSCHRIFT

(45) Veröffentlichungstag der Patentschrift:
16.09.87

(51) Int. Cl.⁴: **F 01 K 23/06,** F 02 C 3/20

(21) Anmeldenummer: **83106179.1**

(22) Anmeldetag: **24.06.83**

(54) Verfahren zum Erzeugen von elektrischer Energie mit einem mit einer Wirbelschichtfeuerung ausgerüsteten Gasturbinen-Dampfkraftwerk.

(30) Priorität: **06.07.82 DE 3225140**

(43) Veröffentlichungstag der Anmeldung:
**18.01.84 Patentblatt 84/3**

(45) Bekanntmachung des Hinweises auf die Patenterteilung:
**16.09.87 Patentblatt 87/38**

(84) Benannte Vertragsstaaten:
**AT BE CH FR LI NL**

(56) Entgegenhaltungen:
**GB - A - 1 498 814**
**GB - A - 2 076 062**
**US - A - 3 986 348**
**US - A - 4 116 005**

**Sonderdruck der Vereinigte Kesselwerke AG,**
**Düsseldorf, "Dampferzeuger mit Wirbelschichtfeuerung**
**unter atmosphärischen und Überdruckbedingungen"**
**von E.WIED, 10/02/78 und 24/02/78**

(73) Patentinhaber: **BROWN, BOVERI & CIE**
**Aktiengesellschaft, Kallstadter Strasse 1,**
**D-6800 Mannheim 31 (DE)**

(72) Erfinder: **Schüller, Karl-Heinz, Daimlerstrasse 5,**
**D-6840 Lampertheim (DE)**

(74) Vertreter: **Kempe, Wolfgang, Dr. et al, c/o BROWN,**
**BOVERI & CIE AG ZPT Postfach 351,**
**D-6800 Mannheim 31 (DE)**

ACTORUM AG

**Beschreibung**

Die Erfindung betrifft ein Verfahren gemäss dem Oberbegriff des Patentanspruches.

Bei einem bekannten Verfahren dieser Art wird der für den Betrieb der Dampfturbine benötigte Dampf in Wärmetauschern erzeugt, die, wie die Wärmetauscher zur Erhitzung der verdichteten Luft, in der Wirbelschichtfeuerung angeordnet sind (US-A-4 116 005). Der in der Dampfturbine entspannte Dampf wird in einem Kondensator niedergeschlagen, die Dampfturbine arbeitet demnach als Kondensationsturbine. Das Kondensat wird in einem vom Rauchgas der Wirbelschichtfeuerung beaufschlagten, separaten Economiser vorgewärmt. Durch die Dampferzeugung in der Wirbelschichtfeuerung wird ein optimaler Feuerungsbetrieb durch die Vielzahl der dort angeordneten Wärmetauscher behindert und die nötige doppelte Abstimmung auf die Erfordernisse des Feuerungs- und Dampferzeugungsbetriebs erfordert einen erhöhten Aufwand. Auch führt der Kondensationsbetrieb der Dampfturbine nicht zu einem guten Gesamtwirkungsgrad der Anlage. In die gleiche ungünstige Richtung wirkt sich die Ausnutzung der Rauchgase nach der Dampferzeugung im separaten Economiser aus.

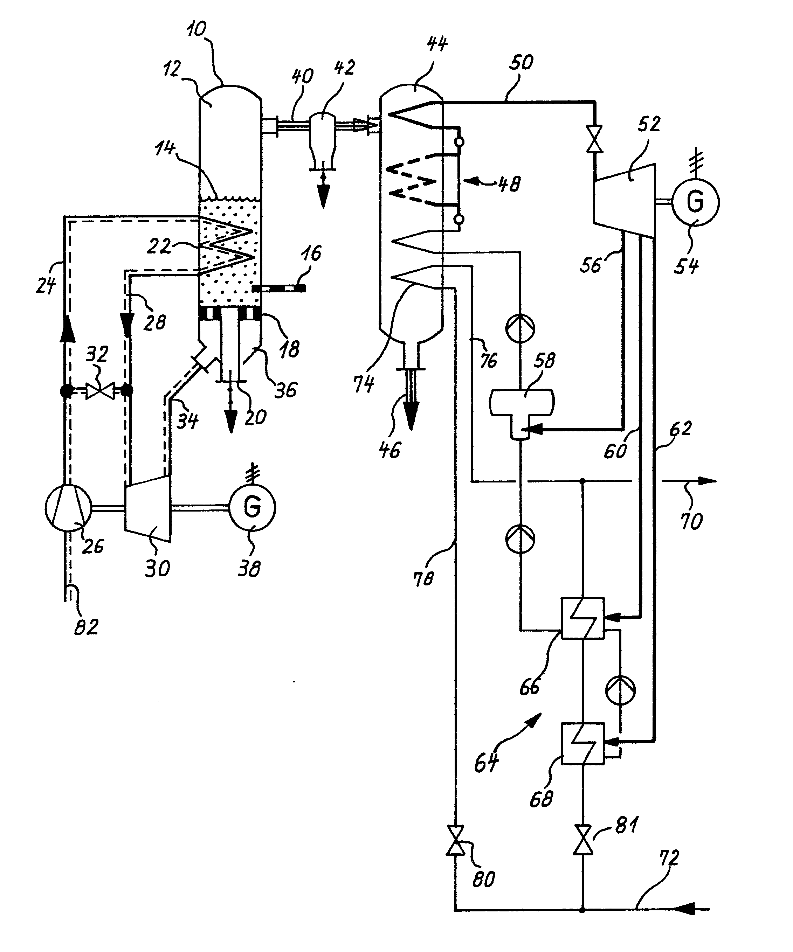

Desweiteren ist ein mit einer Wirbelschicht versehenes Gasturbinen-Dampfkraftwerk bekannt geworden, bei dem neben der Wirbelschichtfeuerung noch die Feuerung des Dampferzeugers betrieben werden muss (Sonderdruck der Firma Vereinigte Kesselwerke AG, Düsseldorf, «Dampferzeuger mit Wirbelschichtfeuerung unter atmosphärischen und Überdruckbedingungen», insbesondere Bild 12 bzw. entsprechender Vortrag von E. Wied zur VGB-Fachtagung Dampfkessel und Dampfkesselbetrieb 10. 02. 1978 und 24. 02. 1978).

Der Erfindung liegt daher die Aufgabe zugrunde, das Verfahren der genannten Art so auszugestalten, dass es mit verringertem Aufwand und unter Beibehaltung eines guten Gesamtwirkungsgrades durchführbar ist.

Die Lösung dieser Aufgabe ist im kennzeichnenden Teil des Patentanspruches angegeben.

Durch die Dampferzeugung im unbefeuerten Abhitzekessel ist der Regelaufwand bzw. die Regelung der Gesamtanlage wesentlich vereinfacht. Gleichzeitig trägt die Energieerzeugung in der als Gegendruck-Dampfturbine ausgebildeten Dampfturbine und die Wärmeabgabe des Gegendruckdampfes in einem Heizwassererwärmer, der Bestandteil eines Heizkreislaufes ist, zusammen mit der Ausnutzung der Rauchgase in einem Abgas-Wärmetauscher zur Beibehaltung eines guten Gesamtwirkungsgrades bzw. zu dessen Steigerung erheblich bei. Insgesamt gesehen ist das erfindungsgemässe Verfahren optimal und einfach mit hohem Gesamtwirkungsgrad durchzuführen.

Weitere Vorteile der Erfindung gehen aus der folgenden Beschreibung einer für die Durchführung des Verfahrens geeigneten Anlage im Zusammenhang mit der schematischen Zeichnung hervor.

Im Ausführungsbeispiel gemäss der Zeichnung ist ein Heizkraftwerk mit einer Wirbelschichtfeuerung 10 versehen. Diese weist einen Feuerraum 12 auf, in dessen unterem Bereich die Wirbelschicht 14 vorgesehen ist. Zur Bildung der Wirbelschicht 14 wird Brennstoff durch eine Fördereinrichtung 16 oberhalb eines Düsenbodens 18 zugeführt. Der Brennstoff kann mit Zusätzen wie Dolomit oder Kalkstein vermengt sein, um Schwefelanteile, die mit dem Brennstoff eingebracht werden, in der Wirbelschicht zu binden. Der im unteren Bereich der Wirbelschichtfeuerung 10 angeordnete Düsenboden 18 weist eine Vielzahl von Öffnungen auf, durch welche die Verbrennungsluft der Wirbelschicht zugeführt wird. Ausserdem ist noch ein Abzug 20 für Ascheanteile vorgesehen, der vom Düsenboden 18 ausgehend nach unten in den Aussenraum geführt ist.

Im Bereich der Wirbelschicht 14 ist ein Wärmetauscher 22 in Form eines Rohrbündels vorgesehen, das einerseits durch die Rohrleitung 24 mit der Druckseite des Verdichters 26 verbunden ist und andererseits durch die Rohrleitung 28 an den Einlass der Gasturbine 30 angeschlossen ist. Hierbei ist zwischen den beiden Leitungen 24 und 28 ein absperrbarer Bypass 32 vorgesehen. Der Ausgang der Gasturbine 30 ist über eine weitere Rohrleitung 34 mit jenem Raum 36 der Wirbelschichtfeuerung verbunden, der unterhalb des Düsenbodens 18 gebildet ist.

Die Welle des Verdichters 26 ist mit der Welle der Gasturbine 30 gekuppelt, ausserdem ist noch die Welle eines elektrischen Generators 38 angekuppelt.

Der obere Bereich der Wirbelschichtfeuerung 10 ist durch eine Rauchgasleitung 40 mit eingefügtem Zyklonabscheider 42 mit dem Abhitzekessel 44 verbunden. Dieser Abhitzekessel 44 weist keine eigene Feuerung auf, er dient lediglich zur Abkühlung der von der Wirbelschichtfeuerung 10 gelieferten Rauchgase.

Der Abhitzekessel 44 wird von den Rauchgasen von oben nach unten durchströmt, die dann im abgekühlten Zustand durch eine Leitung 46 zu einem nicht dargestellten Kamin geleitet werden. Im Abhitzekessel sind in bekannter Weise Wärmetauscher, wie z.B. für die Verdampfung von Speisewasser und Überhitzung des erzeugten Dampfes, vorgesehen und insgesamt mit dem Bezugszeichen 48 gekennzeichnet. Der Dampf wird durch die Leitung 50 vom Abhitzekessel 44 zu einer mit Anzapfungen versehen Gegendruck-Dampfturbine 52 geleitet, die einen elektrischen Generator 54 antreibt. Eine dieser Anzapfungen ist über eine Leitung 56 an einen Kondensat-Vorwärmer 58 angeschlossen, zwei weitere Leitungen 60 und 62 verbinden weitere Anzapfungen der Dampfturbine mit dem Heizwassererwärmer 64. Dieser weist zwei wasserseitig in Serie geschaltete Wärmetauscher 66 und 68 auf, zu denen je eine der Leitungen 60, 62 führt. Ferner sind in üblicher Weise Rückführorgane für das Kondensat zum Kondensat-Vorwärmer 58 angeordnet.

Der Heizwassererwärmer 64 ist Bestandteil eines Heizkreislaufs, der eine Vorlaufleitung 70 und eine Rücklaufleitung 72 aufweist. Durch die Vorlaufleitung 70 strömt Heizwasser, das im Heizwassererwärmer 64 erhitzt wurde, zu nicht dargestellten Verbrauchern, dort wird es abgekühlt und strömt als Rücklaufwasser zur erneuten Erwärmung dem Heizwassererwärmer 64 wieder zu. Dem Heizwassererwärmer 64, der mit Anzapfdampf beheizt wird, ist eine weiterer Wärmetauscher 74 durch Rohrleitungen 76 und 78 unter Einschaltung eines Regel- und Absperrorgans 80 parallel geschaltet. Dieser Wärmetauscher 74 ist im Abhitzekessel, vorzugsweise im Bereich niedriger Rauchgastemperaturen, angeordnet und ist daher direkt von Rauchgase beheizt. Da auch der Heizwassererwärmer 64 durch ein Regel- und Absperrorgan 81 an die Rücklaufleitung 72 angeschlossen ist, kann die Verteilung des Rücklaufwassers auf den Heizwassererwärmer 64 und den Wärmetauscher 74 eingestellt werden.

Für die Inbetriebnahme der Anlage ist ferner ein in der Zeichnung nicht dargestellter Booster-Verdichter mit eigenem Antrieb vorgesehen, falls zu diesem Zweck keine gespeicherte Druckluft zur Verfügung steht.

Während des Betriebs der Anlage wird vom Verdichter 26 durch die Leitung 82, gegebenenfalls durch ein Filter, Luft angesaugt, verdichtet und durch die Rohrleitung 24 dem Wärmetauscher 22 zugeführt. Dort wird diese verdichtete Luft durch die Wirbelschicht 14 erhitzt und durch die Leitung 28 an die Gasturbine 30 abgegeben. In dieser wird die heisse Luft unter Leistungsabgabe entspannt und durch die Leitung 34 dem Raum 36 unterhalb des Düsenbodens 18 als Verbrennungsluft zugeleitet. Diese Luft weist hier einen Druck von ca. 1,2 bis 1,8 bar auf und strömt durch die Öffnungen des Düsenbodens zur Wirbelschicht 14, deren Verbrennung sie bewirkt. Die Rauchgase der Wirbelschichtfeuerung haben beim Austritt aus dem Feuerraum 12 eine Temperatur von ca. 750 bis 950° Celsius und werden durch die Rauchgasleitung 40 dem Abhitzekessel 44 zugeführt, in dem sie unter Wärmeabgabe an die dort angeordneten Heizflächen nach unten zur Leitung 46 strömen. Die Rauchgase sind hierbei durch den Zyklonabscheider 42 weitgehend von Staub- oder Ascheteilchen befreit.

Im Abhitzekessel 44 wird in bekannter Weise Dampf erzeugt, der durch die Leitung 50 der Gegendruck-Dampfturbine 52 zugeführt wird, welche den elektrischen Generator 52 antreibt. Der Anzapfdampf dieser Dampfturbine 52 wird dem Kondensat-Vorwärmer 58 sowie durch die Leitungen 60 und 62 dem Heizwassererwärmer 64 zur Erwärmung des im Heizkreislauf zirkulierenden Wassers zugeführt. Hierbei ist es möglich, einen Teil des Heizwassers durch mehr oder weniger weites öffnen des Regel- und Absperrorgans 80 dem Wärmetauscher 74 zuzuführen, so dass der Heizkreislauf zusätzlich zur weiteren Abkühlung der Rauchgase herangezogen werden kann. Elektrische Energie wird gleichzeitig durch die beiden elektrischen Generatoren 38 und 54 an nicht dargestellte elektrische Verbraucher abgegeben, wobei durch den Generator 38 die Stromausbeute wesentlich erhöht wird.

Die Rauchgastemperatur der Wirbelschichtfeuerung 10 soll beim Verlassen des Feuerraums 12 höchstens eine Temperatur von 950° Celsius aufweisen, da sonst Schwierigkeiten mit der Entschwefelung der Rauchgase sowie bezüglich des Ascheaustrags aus der Feuerung entstehen können. Zur Einstellung dieser gegenüber üblichen Feuerungen niedrigen Feuerraumtemperatur muss der Luftüberschuss, mit welcher die Feuerung betrieben wird, stark erhöht werden, z.B. auf Werte von 1,5 bis 2,5 und darüber das heisst, dass der Feuerung eine entsprechende grosse Luftmenge zugeführt werden muss, durch deren Entspannung in der Gasturbine 30 viel mechanische Energie gewonnen und im Generator 38 in elektrische Energie umgewandelt wird. Die Gesamtanlage arbeitet daher sogar bei einem Betrieb der Feuerung mit hohen Luftüberschüssen mit einem unverändert guten Wirkungsgrad, im Gegensatz zu üblichen Feuerungen, bei denen mit steigendem Luftüberschuss der Wirkungsgrad abfällt. Darüber hinaus ist durch den unbefeuerten Abhitzekessel 44 der Regelaufwand bzw. die Regelung der Gesamtanlage wesentlich vereinfacht. Schliesslich darf nicht übersehen werden, dass durch die wahlweise Zuschaltung des Wärmetauschers 74 zum Heizkreislauf gegebenenfalls eine weitere Abkühlung des Rauchgases im Abhitzekessel möglich und somit eine weitere Wirkungsgradverbesserung gegeben ist.

**Patentanspruch**

Verfahren zum Erzeugen von elektrischer Energie und Wärmeenergie mit einem mit einer Wirbelschichtfeuerung (10) ausgerüsteten Gasturbinen-Dampfkraftwerk, wobei Luft verdichtet, in einem in der Wirbelschichtfeuerung (10) angeordneten Wärmetauscher (22) erhitzt, in einer den Verdichter (26) antreibenden Gasturbine (30) unter Abgabe der Überschussenergie an einen elektrischen Generator (38) entspannt und insgesamt als Verbrennungsluft der Wirbelschichtfeuerung (10) zugeführt wird, wobei mit Hilfe von in der Wirbelschichtfeuerung freigesetzter Wärmeenergie Dampf erzeugt und einer einen zweiten elektrischen Generator (54) antreibenden Dampfturbine zugeführt wird, und wobei die Rauchgase nach der der Dampferzeugung dienenden Wärmeabgabe einem Abgas-Wärmetauscher (74) zur weiteren Abkühlung zugeleitet werden, dadurch gekennzeichnet, dass der Dampf in einem der Wirbelschichtfeuerung (10) rauchgasseitig nachgeschalteten, unbefeuerten und separaten Abhitzekessel (44) erzeugt und der als Gegendruckdampfturbine (52) ausgebildeten Dampfturbine zugeführt wird, dass mit der Gegendruckdampfturbine (52) entnommenen Dampf ein in einem Heizkreislauf vorgesehener Heizwassererwärmer (64) beaufschlagt wird, und dass der innerhalb des Abhitzekessels (44) vom Rauchgas beaufschlagte Abgas-Wärmetauscher (74) in Parallelschaltung zum Heizwassererwärmer (64) vom Heizwasser mit einstellbarem Heizwasser-Massenstrom durchströmt wird.

## Claim

Method for generating electrical energy and heat energy using a gasturbine/steam power station equipped with a fluidised bed firing system (10), in which air is compressed, heated in a heat exchanger (22) located in the fluidised bed firing system (10), expanded in a gas turbine (30) driving the compressor (26), giving up the surplus energy to an electrical generator (38), and is supplied in total as combustion air to the fluidised bed firing system (10), in which steam is generated using the heat energy released in the fluidised bed firing system and is supplied to a steam turbine driving a second electrical generator (54), and in which the combustion gases are supplied, after the heat rejection serving to generate the steam, to an exhaust gas heat exchanger (74) for further cooling, characterized in that the steam is generated in an unfired and separate exhaust heat boiler (44) fitted downstream on the combustion gas side of the fluidised bed firing system (10) and is supplied to the steam turbine designed as a back pressure steam turbine (52), that a hot water heater (64) provided in a heating circuit is subjected to the steam extracted from the back pressure steam turbine (52), and that hot water with an adjustable hot water mass flow flows through the exhaust gas heat exchanger (74), connected in parallel with the hot water heater (64) and subject to combustion gas within the exhaust heat boiler (44).

## Revendication

Procédé de production d'énergie électrique et d'énergie calorifique au moyen d'une centrale thermique à vapeur à turbine à gaz équipée d'un chauffage (10) à couche turbulente, l'air étant comprimé, chauffé dans un échangeur de chaleur (22) placé dans le chauffage (10) à couche turbulente, détendu dans une turbine à gaz (30) entraînant le compresseur (26) et fournissant le surplus d'énergie à un générateur électrique (38), puis amené en totalité, en tant qu'air de combustion, au chauffage (10) à couche turbulente, de la vapeur étant produite à l'aide de l'énergie calorifique libérée dans le chauffage à couche turbulente et étant envoyée à une turbine à vapeur entraînant un second générateur électrique (54), et les gaz de fumée, après dissipation de la chaleur servant à la production de vapeur, étant dirigés vers un échangeur de chaleur (74) pour refroidissement complémentaire, charactérisé par le fait que la vapeur est produite dans une chaudière de récupération (44), séparée et sans chauffage propre, installée en aval du chauffage (10) à couche turbulente, côté gaz de fumée, et est amenée à la turbine à vapeur réalisée sous la forme d'une turbine à contre-pression (52), que la vapeur prélevée sur la turbine à contre-pression (52) alimente un chauffe-eau (64) prévu dans un circuit d'eau de chauffage et que l'échangeur de chaleur (74) soumis à l'action des gaz brûlés à l'intérieur de la chaudière de récupération (44) est monté parallèlement au chauffe-eau de chauffage (64) et est parcouru par un courant massique réglable d'eau de chauffage.